# EUROPEAN PATENT SPECIFICATION

(11) **EP 3 450 084 B1**
(45) Date of publication and mention of the grant of the patent: **07.04.2021**
(21) Application number: 18183020.9
(22) Date of filing: 11.07.2018
(51) Int. Cl.: B23K 26/342, F01D 5/00, F01D 5/12, B23K 26/60, B23K 101/00, B23K 103/14

(54) **METHOD OF FORMING A WELD CLAD LAYER AND METHOD OF REPAIRING A FAN BLADE BY LASER DEPOSITION ; CORRESPONDING AIRFOIL**
VERFAHREN ZUM HERSTELLUNG EINE SCHWEISSBESCHICHTUNG UND VERFAHREN ZUM REPARIEREN EINER VENTILATORSCHAUFEL DURCH LASERAUFTRAGSSCHWEISSEN ; ENTSPRECHENDE SCHAUFEL
MÉTHODE DE FORMATION D'UN PLACAGE SOUDÉ ET METHODE DE RÉPARATION D'UNE AUBE PAR SOUDURE PAR LASER ; AUBE CORRESPONDANTE

(30) Priority: 07.08.2017 US 201715670775
(43) Date of publication of application: 06.03.2019
(73) Proprietor: Raytheon Technologies Corporation, Farmington, CT 06032 (US)
(72) Inventor: POTTER, David N., East Hampton, CT Connecticut 06424 (US); BRINDLEY, William J., Hebron, CT Connecticut 06248 (US); LIN, Wangen, South Glastonbury, CT Connecticut 06073 (US)
(74) Representative: Dehns

(56) References cited:
- WO-A1-2015/065847
- WO-A1-2016/063270
- WO-A1-2017/103849
- US-A1- 2006 193 612
- US-A1- 2011 293 840
- US-A1- 2012 027 603
- US-A1- 2016 318 130

## Description

### FIELD

The present disclosure relates generally to repairing aircraft parts, and more specifically, to repairing damaged titanium components using a titanium or titanium alloy weld clad layer.
The present disclosure relates in particular to a method of forming a weld clad layer having a substantially equiaxed grain microstructure, and a method of repairing a fan blade of a gas turbine engine according to the preamble of claims 1 and 8 respectively (see for example US 2006/193612 A1).

### BACKGROUND

Weld cladding is a welding process in which a liquid metal is deposited on a metal substrate. During a weld cladding process an energy source may be applied to liquefy a solid filler metal which is deposited in a damaged portion of the component substrate. Use of weld cladding to repair certain gas turbine engine components, for example, an airfoil, may pose challenges, as depending on the specific location of the damage, the component may require that the repaired area exhibit material properties similar to the component substrate. These challenges may be more pronounced for components with demanding material mechanical properties requirements, for example, fan blades which may have fatigue or impact loading requirements. Further, producing a weld clad layer which exhibits similar material properties to the component substrate tends to be more difficult for components comprised of titanium or titanium alloys as compared to other engineering metals and alloys, as the grain microstructures of titanium and titanium alloy welds tend to form columnar microstructures having directional material properties.

Methods of depositing metal on a substrate are known in the art, for example: WO 2016/063270 discloses a Laser-Induced Forward Transfer technique wherein laser pulses are impinged on a donor substrate to create droplets which land on the acceptor substrate and allowing for controlled deposition patterns such as circuits to be created; WO 2017/103849 discloses a method of creating metal components utilizing metal deposition followed by machining to create the shape of the base; and WO 2011/0293840 discloses a direct metal deposition technique for repairing metal components wherein a layer of metallic material is deposited on a metal substrate (causing a portion of the metal substrate layer to melt) before then friction stirring the layer to generate a homogeneous microstructure of the deposited layer. Other techniques of welding and repairing components includes direct high-frequency pressure welding as described in US 2012/0027603.

### SUMMARY

A method of forming a weld clad layer having a substantially equiaxed grain microstructure according to the present invention is defined in claim 1, wherein the method includes: at least 70% of the area of the weld clad layer is comprised of grains having an aspect ratio of 6 to 1 or less, forming a repair area in a substrate to remove a damaged portion of the substrate, depositing a first layer of laser deposition spots in the repair area, and depositing a second layer of laser deposition spots over the first layer of laser deposition spots.

In various embodiments, the first laser deposition spot and the second laser deposition spot may comprise at least one of a fusion weldable powder material or a fusion weldable wire material. The fusion weldable powder material or the fusion weldable wire material may comprise the at least one of titanium or titanium alloy.

In various embodiments, forming the second layer of laser deposition spots over the first layer of laser deposition spots may comprise forming a third laser deposition spot, and forming a fourth laser deposition spot adjacent to the third laser deposition spot. A size of the third laser deposition spot may be selected such that the third laser deposition spot will solidify prior to deposition of the fourth laser deposition spot. The third laser deposition spot and the fourth laser deposition spot may comprise at least one of titanium or titanium alloy. The method may further comprise locating the third laser deposition spot over the first laser deposition spot and the second laser deposition spot. In various embodiments, the substrate may comprise an airfoil. In various embodiments, the airfoil may comprise a fan blade.

A method of repairing a fan blade of a gas turbine engine according to the present invention is defined in claim 8, and includes: forming a repair area in the fan blade, depositing a first layer of first laser deposition spots in the repair area, and depositing a second layer of second laser deposition spots over the first layer of first laser deposition spots, to form a weld clad layer comprising a substantially equiaxed grain microstructure, where at least 70% of the area of the weld clad layer is comprised of grains having an aspect ratio of 6 to 1 or less.

In various embodiments, the first laser deposition spots may comprise at least one of a fusion weldable powder material or a fusion weldable wire material. The fusion weldable powder material or the fusion weldable wire material may comprise at least one of titanium or titanium alloy. The method may further comprise locating at least one of the second laser deposition spots over a first spot of the first laser deposition spots and a second spot of the first laser deposition spots. The first layer of first laser deposition spots and the second layer of second laser deposition spots may form a weld clad layer comprising a substantially equiaxed grain microstructure.

These features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements.
FIG. 1 illustrates a gas turbine engine, in accordance with various embodiments;
FIGs. 2A and 2B illustrate a fan blade comprising a damaged area, in accordance with various embodiments;
FIGs. 3A, 3B, 3C, 3D, 3E, 3F, and 3G illustrate formation of a weld clad layer having a substantially equiaxed grain microstructure, in accordance with various embodiments; and
FIG. 4 illustrates a method forming a weld clad layer having a substantially equiaxed grain microstructure, in accordance with various embodiments.

### DETAILED DESCRIPTION

The detailed description of exemplary embodiments herein makes reference to the accompanying drawings, which show exemplary embodiments by way of illustration. While these exemplary embodiments are described in sufficient detail to enable those skilled in the art to practice the exemplary embodiments of the disclosure, it should be understood that other embodiments may be realized and that logical changes and adaptations in design and construction may be made in accordance with this disclosure and the teachings herein. Thus, the detailed description herein is presented for purposes of illustration only and not limitation. The steps recited in any of the method or process descriptions may be executed in any order and are not necessarily limited to the order presented.

Furthermore, any reference to singular includes plural embodiments, and any reference to more than one component or step may include a singular embodiment or step. Also, any reference to attached, fixed, connected or the like may include permanent, removable, temporary, partial, full and/or any other possible attachment option. Additionally, any reference to without contact (or similar phrases) may also include reduced contact or minimal contact. Surface cross hatching lines may be used throughout the figures to denote different parts but not necessarily to denote the same or different materials.

Throughout the present disclosure, like reference numbers denote like elements. Accordingly, elements with like element numbering may be shown in the figures, but may not necessarily be repeated herein for the sake of clarity. As used herein, "aft" refers to the direction associated with the tail (i.e., the back end) of an aircraft, or generally, to the direction of exhaust of the gas turbine. As used herein, "forward" refers to the direction associated with the nose (i.e., the front end) of an aircraft, or generally, to the direction of flight or motion. As used herein, "distal" refers to the direction outward, or generally, away from a reference component. As used herein, "proximal" and/or "proximate" refers to a direction inward, or generally, towards the reference component.

Weld clad layers comprising titanium or titanium alloys and methods of forming the same are disclosed herein. Weld clad layers comprising titanium or titanium alloys may be employed to repair or modify a titanium aerospace part, such as a fan blade. The disclosed method tends to avoid resulting in columnar grain microstructures, described in detail below, that may be associated with conventional titanium welds.

During a weld cladding process, an energy source is used to liquefy a solid filler metal, and the liquid filler metal is deposited on a metal substrate, thereby forming a weld clad layer on the metal substrate. The process repeats until a desired height of the weld clad layer is reached. During the weld clad process, as the heat source moves away from molten liquid metal, the heat dissipates through the substrate and the deposited liquid metal solidifies.

During solidification, atoms from the liquid liberate their latent heat of fusion to join and extend the crystal structure of the individual grains on the substrate along a moving solid-liquid interface. Initially, there are no grain boundaries parallel to the boundaries of the liquid deposit, as the existing grains on the substrate grow into the deposit with the same orientation. This grain growth mechanism (i.e., grain growth that mimics the grain orientation of the substrate) is referred to as epitaxial grain growth.

As the deposited liquid metal solidifies, the newly grown grains compete against each other, and a growth rate of each grain may be dependent on its growth direction relative to the direction of heat dissipation. For example, a grain having an easy growth direction aligned with the direction of heat dissipation may grow the faster than a grain having an easy growth direction that is different from the heat dissipation direction. The slower growing grain may eventually be out-grown by the adjacent "neighbor" grains. This phenomenon is known as competitive grain growth. Because of the epitaxial grain growth and competitive grain growth mechanisms described above, weld clad layers (and particularly weld clad layers comprised of titanium or titanium alloy) tend to exhibit a coarse, columnar microstructure.

For example, in a titanium alloy weld clad layer, the grains in the substrate on which the titanium alloy weld clad layer may be formed are about equal in length and extend in all directions. This is referred to as an equiaxed grain microstructure. The grains in the weld clad layer may be elongated along the direction of heat transfer. This is referred to as a columnar grain microstructure.

The material properties of the equiaxed grain microstructure are typically equal in all directions. The material properties of the columnar grain microstructure are directional depending on the orientation of the grains. Formation of a columnar grain microstructure may result in a material property reduction in one direction over another direction. The directional material property of a columnar grain microstructure can cause the material of the weld clad layer and/or the substrate to fracture in response to an external force, such as an impact. The directional material properties of columnar grain microstructures may be detrimental to aerospace components (e.g., fan blades) which may be engineered to assume material properties (e.g., ductility) will be equal in all directions.

There is a long felt need in the industry for a weld process that produces weld clad layers that avoid columnar grain microstructures and directional material properties in favor of equiaxed grain microstructures and material properties which are equal in all directions. Producing an equiaxed grain microstructure tends to be more difficult for welds comprised of titanium or titanium alloys, as compared to other metals and alloys, due to titanium and titanium alloy welds being particularly susceptible to formation of columnar grain microstructures. Titanium alloys change their crystallographic structure from a hexagonal close packed (HCP) structure at room temperature to a body center cubic (BCC) structure during welding. The easy growth direction of grains with the BCC structure can cause the grains to grow much faster than other grains that have unfavorable growth direction. Accordingly, competitive growth mechanisms may lead to weld clad layers formed from titanium and titanium alloy having more pronounced columnar grain microstructures.

As disclosed herein, a laser spot deposition process may be employed to form a titanium or titanium alloy weld clad layer having a microstructure that resembles an equiaxed grain microstructure. Titanium and titanium alloy weld clad layers formed using the disclosed laser spot deposition method may exhibit mechanical material properties (e.g., ductility) that more closely resemble the mechanical material properties of the substrate.

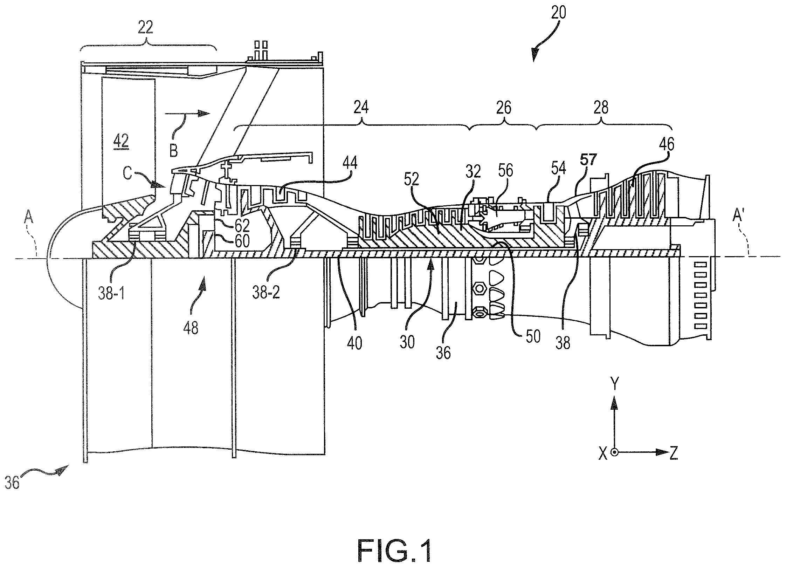

With reference to FIG. 1, a gas turbine engine 20 is shown according to various embodiments. Gas turbine engine 20 may be a two-spool turbofan that generally incorporates a fan section 22, a compressor section 24, a combustor section 26 and a turbine section 28. Alternative engines may include, for example, an augmentor section among other systems or features. In operation, fan section 22 can drive coolant (e.g., air) along a path of bypass airflow B while compressor section 24 can drive coolant along a core flowpath C for compression and then combustion in combustor section 26 then expansion through turbine section 28. Although depicted as a turbofan gas turbine engine 20 herein, it should be understood that the concepts described herein are not limited to use with turbofans as the teachings may be applied to other types of turbine engines including three-spool architectures.

Gas turbine engine 20 may generally comprise a low speed spool 30 and a high speed spool 32 mounted for rotation about an engine central longitudinal axis A-A' relative to an engine static structure 36 (also referred to as an engine casing structure) via several bearing systems 38, 38-1, and 38-2. Engine central longitudinal axis A-A' is oriented in the z direction on the provided xyz axes. It should be understood that various bearing systems 38 at various locations may alternatively or additionally be provided, including for example, bearing system 38, bearing system 38-1, and bearing system 38-2.

Low speed spool 30 may generally comprise an inner shaft 40 that interconnects a fan 42, a low pressure compressor 44, and a low pressure turbine 46. Inner shaft 40 may be connected to fan 42 through a geared architecture 48 that can drive fan 42 at a lower speed than low speed spool 30. Geared architecture 48 may comprise a gear assembly 60 enclosed within a gear housing 62. Gear assembly 60 couples inner shaft 40 to a rotating fan structure. High speed spool 32 may comprise an outer shaft 50 that interconnects a high pressure compressor 52 and high pressure turbine 54. A combustor 56 may be located between high pressure compressor 52 and high pressure turbine 54. A mid-turbine frame 57 of engine casing structure 36 may be located generally between high pressure turbine 54 and low pressure turbine 46. Mid-turbine frame 57 may support one or more bearing systems 38 in turbine section 28. Inner shaft 40 and outer shaft 50 may be concentric and rotate via bearing systems 38 about the engine central longitudinal axis A-A', which is collinear with their longitudinal axes. As used herein, a "high pressure" compressor or turbine experiences a higher pressure than a corresponding "low pressure" compressor or turbine.

The core airflow C may be compressed by low pressure compressor 44 then high pressure compressor 52, mixed and burned with fuel in combustor 56, then expanded over high pressure turbine 54 and low pressure turbine 46. Turbines 46, 54 rotationally drive the respective low speed spool 30 and high speed spool 32 in response to the expansion.

Gas turbine engine 20 may be, for example, a high-bypass ratio geared aircraft engine. In various embodiments, the bypass ratio of gas turbine engine 20 may be greater than about six (6). In various embodiments, the bypass ratio of gas turbine engine 20 may be greater than ten (10). In various embodiments, geared architecture 48 may be an epicyclic gear train, such as a star gear system (sun gear in meshing engagement with a plurality of star gears supported by a carrier and in meshing engagement with a ring gear) or other gear system. Geared architecture 48 may have a gear reduction ratio of greater than about 2.3 and low pressure turbine 46 may have a pressure ratio that is greater than about five (5). In various embodiments, the bypass ratio of gas turbine engine 20 is greater than about ten (10:1). In various embodiments, the diameter of fan 42 may be significantly larger than that of the low pressure compressor 44, and the low pressure turbine 46 may have a pressure ratio that is greater than about five (5:1). Low pressure turbine 46 pressure ratio may be measured prior to inlet of low pressure turbine 46 as related to the pressure at the outlet of low pressure turbine 46 prior to an exhaust nozzle. It should be understood, however, that the above parameters are exemplary of various embodiments of a suitable geared architecture engine and that the present disclosure contemplates other gas turbine engines including direct drive turbofans. A gas turbine engine may comprise an industrial gas turbine (IGT) or a geared aircraft engine, such as a geared turbofan, or non-geared aircraft engine, such as a turbofan, or may comprise any gas turbine engine as desired.

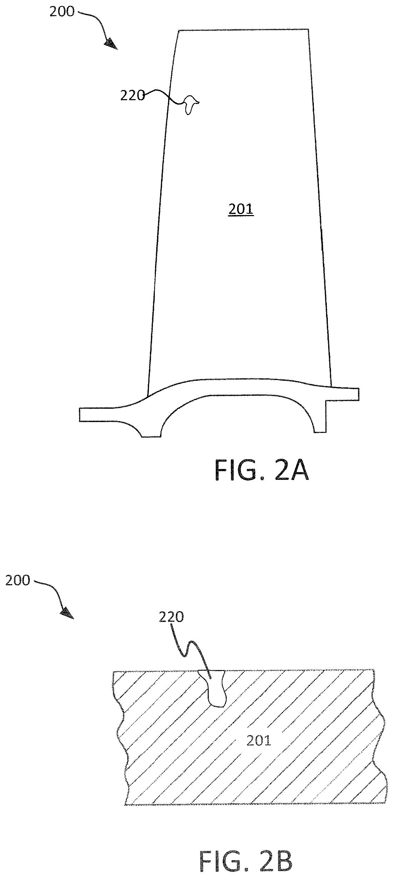

Referring to FIG. 2A, a blade 200 of fan section 22 is shown, according to various embodiments. Blade 200 may comprise a base substrate material 201 According to the present invention, base substrate material 201 comprises titanium and/or titanium alloy. Base substrate material 201 may exhibit material properties (e.g., ductility) that are equal in all directions. Although the disclosure is directed to a method of repairing a titanium or titanium alloy blade in fan section 22, one skilled in the art will realize that the features disclosed herein may be equally applicable to titanium or titanium alloy blades or airfoils in high pressure compressor 52 and low pressure compressor 44, and to other titanium or titanium alloy components of gas turbine engine 20 (FIG. 1).

In various embodiments, blade 200 may include a damaged portion 220. FIG. 2B illustrates a cross-section view of damaged portion 220. Damaged portion 220 may be formed in substrate material 201 during, for example, a manufacture of blade 200 (e.g., during molding, casting, or machining), or during operation (e.g., from fatigue or foreign object strike). Damaged portion 220 may weaken blade 200 and/or make blade 200 susceptible to further damage and fracture. Thus, it may be desirable to repair damaged portion 220.

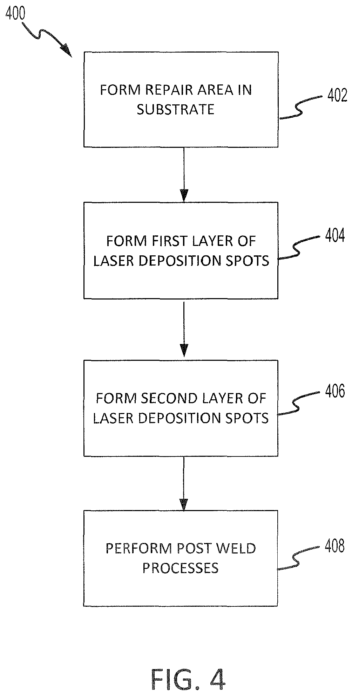

With reference to FIG. 4, a method 400 of repairing a titanium or titanium alloy component by forming a titanium or titanium ally weld clad layer having a substantially equiaxed grain microstructure is shown, according to various embodiments. As used herein and according to the present invention, "substantially equiaxed" means at least 70% of the area of the weld clad layer is comprised of grains having an aspect ratio, which is a ratio of grain length to grain width, of 6 to 1 or less.
Microstructures having substantially equiaxed grain microstructure may exhibit material properties which are about equal in all directions. Microstructures that have substantially equiaxed grain microstructure may exhibit material properties which are similar to the material properties of the parent substrate.

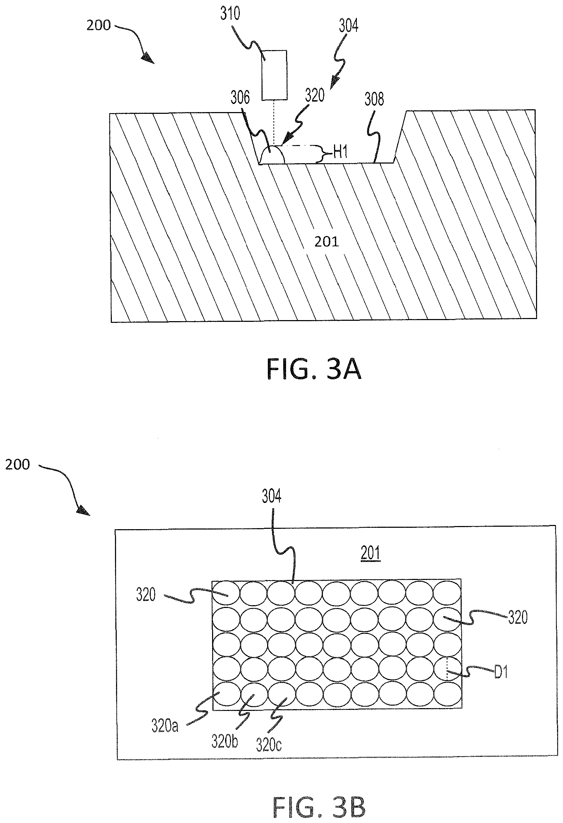

Method 400 begins by removal of damaged portion 220 from blade 200. Damaged portion 220 may be removed by machining, grinding, or other suitable operation (step 402). Removal of damaged portion 220 may form a repair area 304 (FIG. 3A) in blade 200 having a substantially flat or planar surface 308. It should be appreciated that repair area 304 may define a circular, rectilinear, or other periphery.

After forming repair area 304, a first layer of laser deposition spots is formed in repair area 304 (step 404). With reference to FIGs. 3A and 3B, a laser deposition system 310 is utilized to deposit a filler alloy 306 as discrete laser deposition spots 320 in repair area 304. Filler alloy 306 may comprise a fusion bondable powder material, a fusion bondable wire material, or other fusion bondable material (i.e., material that may be melted by laser radiation and metallurgically bonded to substrate material 201 of blade 200). According to the present invention, filler alloy 306 comprises titanium or titanium alloy.

During a laser deposition process, a filler material such as wire or powder is melted by laser radiation and metallurgically bonded to the substrate (e.g., blade 200). The filler material may be injected into the focused beam of a high-power laser under controlled atmospheric conditions. The focused laser beam melts a surface of the target substrate material (e.g., base substrate 201), generating a small molten pool of base material. The filler material 306 is delivered into the same spot and is absorbed into the pool of base material, thus generating a spot 320.

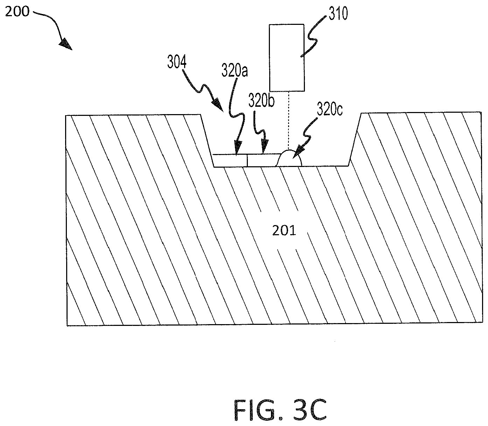

A diameter D1 and a height HI of each spot 320 and the laser energy used to form each spot 320 may be selected such that the liquid metal in an earlier deposited spot 320 solidifies before the adjacent spot 320 is deposited. With reference to FIGs. 3B and 3C, spot 320a is deposited prior to the adjacent spot 320b. Spot 320a solidifies prior to deposition of spot 320b. Spot 320c is deposited after spot 320b Spot 320b solidifies prior to the deposition of spot 320c. The size (i.e., the diameter D1 and height HI) of each spot 320 and laser energy used to form each spot 320 are also selected such that the liquid metal in spots 320 solidifies before the next layer of laser deposition spots, discussed in further detail below, is deposited.

According to the present invention, each spot 320 is formed having a height HI between 0.127 mm and 1.016 mm (i.e., between 0.005 inches and 0.040 inches) and a diameter D1 between 0.508 mm and 4.064 mm (i.e. between 0.020 inches and 0.160 inches). In various embodiments, each spot 320 may be formed having a height HI between 0.127 mm and 0.508 mm (i.e. between 0.005 and 0.020 inches) and a diameter D1 between 0.508 mm and 2.032 mm (i.e., between 0.020 inches and 0.080 inches). The height and diameter of each spot 320 may cause each spot 320 to contain only a small amount of liquid metal. The small amount of liquid metal in spots 320 may be capsulated by the lower temperature of substrate material 201 and a room temperature shielding gas above the spot. For example, laser deposition system 310 may be configured to dispense argon gas to protect the molten metal of spots 320. According to the present invention, the laser energy used to form each spot 320 is between 100 watt and 500 watt, and the laser is be applied for between 0.1 second and 0.75 seconds. In various embodiments, the laser energy used to form each spot 320 may be between 175 watt and 425 watt, and the laser may be applied for between 0.15 seconds and 0.5 seconds. The low heat input coupled with the effective cooling by substrate material 201 and the shielding gas above the spot may allow the latent heat of fusion to be dissipated in less an one second (e.g., 0.5 seconds or less).

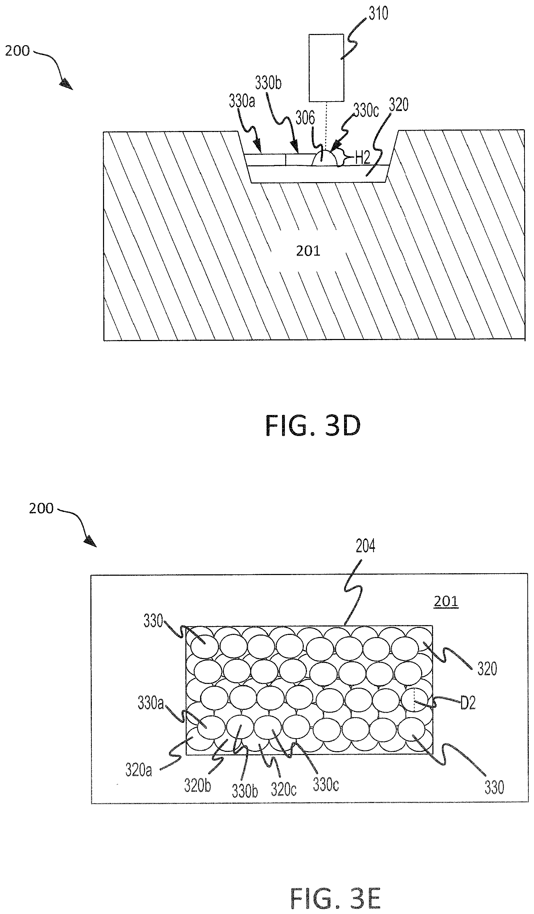

Returning to FIG. 4, after the first layer of laser deposition spots is formed, a second layer of laser deposition spots may be formed over the first layer of laser deposition spots (step 406). With reference to FIGs. 3D and 3E, laser deposition system 310 may be utilized to deposit filler alloy 306 as discrete laser deposition spots 330 over solidified laser deposition spots 320. In various embodiments one or more spots 330 may be located over two or more of the spots 320. For example, spot 330a may overlap spot 320a and spot 320b, and spot 330b may overlap spot 320b and spot 320c.

According to the present invention, the size (i.e., the diameter D2 and height H2) of each spot 330 and the laser energy used to form each spot 330 is selected such that the liquid metal in an earlier deposited spot 330 solidifies before the adjacent spot 330 is deposited. Spot 330a is deposited prior to spot 330b and solidifies prior to deposition of spot 330b. Spot 330b solidifies prior to deposition of spot 330c. According to the present invention, each spot 330 is formed having a height H2 between 0.127 mm and 1.016 mm (i.e., between 0.005 inches and 0.040 inches) and a diameter D2 between 0.508 mm and 4.064 mm (i.e., between 0.020 inches and 0.160 inches). In various embodiments, each spot 330 may be formed having a height H2 between 0.127 mm and 0.508 mm (i.e., between 0.005 and 0.020 inches) and a diameter D2 between 0.508 mm and 2.032 mm (i.e., between 0.020 and 0.080 inches). Each spot 330 may contain only a small amount of liquid metal. The small amount of liquid metal in spots 330 may be capsulated by the lower temperature solid metal (e.g., solidified spots 320 and substrate material 201) and a room temperature shielding gas above the spot. The low heat input coupled with the effective cooling by substrate material 201 and the shielding gas above the spot may allow the latent heat of fusion to be dissipated in less an one second. For example, each spot 320 may solidify in 0.5 seconds or less. In various embodiments, each spot 320 may solidify in 0.2 seconds or less.

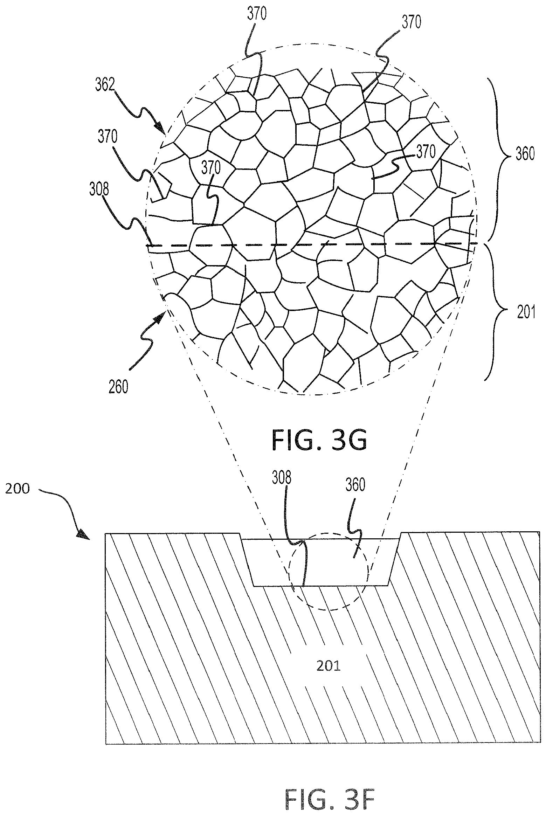

With reference to FIGs. 3F and 3G, the laser spot deposition continues until the resulting weld clad layer 360 reaches a desired height. Stated another way, weld clad layer 360 is formed by filling, or at least partially filling, repair area 304 with multiple of layers of laser deposition spots. After the desired height of weld clad layer 360 is reached, post weld processes may be performed (step 408 of FIG. 4). Post weld processes may include, but are not limited to, solution heat treatment plus aging heat treatment, stress relief heat treatment, hot isostatic pressing, stress relief by mechanical methods, and/or surface peening to induce surface residual stress. Post weld processes may further include blending weld clad layer 360 into substrate material 201 to form a continuous surface.

Throughout the laser spot deposition process, the grains 370 of each newly deposited spot grow from existing solid grains 370 that exhibit new orientations from one spot to the next. Stated another way, the grains 370 of each newly deposited spot grow from the grains of previously deposited spots that have solidified. Configuring the spots to solidify prior to deposition of the next adjacent spot and/or layer of spots may overcome the problems associated with conventional weld methods that deposit new liquid metal onto solidifying (as opposed to solidified) liquid metal. Depositing new liquid metal onto solidifying metal may create a columnar microstructure as the grains of the new liquid metal tend to continue to grow along the existing growth direction of the grains of the solidifying metal. For example, conventional weld methods tend to result in weld clad layers wherein 20% or less of the area of weld clad layer is comprised of grains having an aspect ratio of 6 to 1 or less. In other words, conventional weld methods tend to result weld clad layers in which grains having aspect ratio of greater than 6 to 1 make up approximately 80% of the area of the weld clad layer. In contrast, depositing new liquid metal on previously solidified liquid metal tends to form a substantially equiaxed microstructure 362 wherein at least 70% of the area of weld clad layer 360 is comprised of grains 370 having an aspect ratio of 6 to 1 or less.

Further, a growth orientation of the grains 370, in each new spot, may align with the heat transfer direction, which interrupts and changes with each new spot location. The growth orientation aligning with the changing and interrupted heat transfer directions may result in the orientation of the grains 370 being interrupted and changed from spot to spot. The interrupted and changed grain orientation may result in weld clad layer 360 having grains 370 that are about equal in size and that extending in varying directions. Stated another way, weld clad layer 360 may comprise a microstructure 362 that resembles an equiaxed grain microstructure and more closely resembles the grain microstructure 260 of substrate material 201. Weld clad layer 360 may exhibit material properties (e.g., ductility) that more closely resemble the material properties of substrate material 201.

As disclosed herein, method 400 produces a titanium or titanium alloy weld clad layer 360 that exhibits desirable grain microstructures. The time associated with the liquid metal solidifying into a solid grain is significantly less than conventional fusion welding processes. Each solidified spot results in a unique heat transfer pattern. The unique heat transfer pattern avoids the columnar microstructure associated with conventional titanium and titanium alloy welds, as the grain growth direction is continuously interrupted and changes rapidly during the deposition process. The interrupted grain growth tends to avoid formation of weld clad layers having a columnar grain microstructure in favor of weld clad layers having a more equiaxed microstructure. The resulting grain microstructure resembles more closely the grain microstructure and material properties of the parent substrate.

Benefits, other advantages, and solutions to problems have been described herein with regard to specific embodiments. Furthermore, the connecting lines shown in the various figures contained herein are intended to represent exemplary functional relationships and/or physical couplings between the various elements. The scope of the inventions is accordingly to be limited by nothing other than the appended claims.

## Claims

1. A method of forming a weld clad layer (360) having a substantially equiaxed grain microstructure, where at least 70% of the area of the weld clad layer is comprised of grains having an aspect ratio or 6 to 1 or less, wherein the aspect ratio is a ratio of grain length to grain width, the method comprising:
forming a repair area (304) in a substrate to remove a damaged portion (220) of the substrate, the substrate comprising at least one of titanium or titanium alloy;
**characterized by** depositing a first layer of laser deposition spots (320) in the repair area (304), the first layer of laser deposition spots (320) comprising a first laser deposition spot (320) and a second laser deposition spot (320) adjacent to the first laser deposition spot (320), wherein a size of the first laser deposition spot (320) is selected such that the first laser deposition spot (320) will solidify prior to deposition of the second laser deposition spot (320), and wherein the first laser deposition spot (320) and the second laser deposition spot (320) comprise at least one of titanium or titanium alloy, wherein each laser deposition spot (320) of the first layer of laser deposition spots (320) is formed having a height between 0.127 mm and 1.016 mm and a diameter between 0.508 mm and 4.064 mm; and
depositing a second layer of laser deposition spots (330) over the first layer of laser deposition spots (320);
wherein a laser energy used to form each laser deposition spot (320) is between 100 watt and 500 watt and is applied for between 0.1 seconds and 0.75 seconds.

2. The method of claim 1, wherein the first laser deposition spot (320) and the second laser deposition spot (320) comprise at least one of a fusion weldable powder material or a fusion weldable wire material,
wherein, optionally, the at least one of the fusion weldable powder material or the fusion weldable wire material comprises the at least one of titanium or titanium alloy of the first laser deposition spot (320) and the second laser deposition spot (320).

3. The method of claim 1 or 2, further comprising forming the first laser deposition spot (320) to include a diameter of between 0.508 mm and 2.032 mm and a height of between 0.127 mm and 0.508 mm.

4. The method of claim 1, 2 or 3, wherein the forming the second layer of laser deposition spots (330) over the first layer of laser deposition spots (320) comprises:
forming a third laser deposition spot (330); and
forming a fourth laser deposition spot (330) adjacent to the third laser deposition spot, wherein a size of the third laser deposition spot (330) is selected such that the third laser deposition spot (330) will solidify prior to deposition of the fourth laser deposition spot (330).

5. The method of claim 4, further comprising locating the third laser deposition spot (330) over the first laser deposition spot (320) and the second laser deposition spot (320).

6. The method of claim 4 or 5, wherein the third laser deposition spot (330) and the fourth laser deposition spot (330) comprise at least one of titanium or titanium alloy.

7. The method of any preceding claim, wherein the substrate comprises an airfoil, wherein, optionally, the airfoil comprises a fan blade (200).

8. A method of repairing a fan blade (200) of a gas turbine engine (20), comprising:
forming a repair area in the fan blade (200), the fan blade (200) comprising at least one of titanium or titanium alloy; and
depositing a first layer of first laser deposition spots (320) in the repair area, the first layer of first laser deposition spots (320) comprising titanium or titanium alloy;
**characterized by** depositing a second layer of second laser deposition spots (330) over the first layer of first laser deposition spots (320), to form a weld clad layer comprising a substantially equiaxed grain microstructure, where at least 70% of the area of the weld clad layer is comprised of grains having an aspect ratio of 6 to 1 or less, wherein the aspect ratio is a ratio of grain length to grain width, and wherein a size of the first laser deposition spots (320) is selected such that the first laser deposition spots (320) will solidify prior to deposition of the second laser deposition spots (320); wherein each laser deposition spot (320) of the first layer of laser deposition spots (320) is formed having a height between 0.127 mm and 1.016 mm and a diameter between 0.508 mm and 4.064 mm;
wherein a laser energy used to form each laser deposition spot (320) is between 100 watt and 500 watt and is applied for between 0.1 seconds and 0.75 seconds.

9. The method of claim 8, wherein the first laser deposition spots (320) comprise at least one of a fusion weldable powder material or a fusion weldable wire material.

10. The method of claim 9, wherein the at least one of the fusion weldable powder material or the fusion weldable wire material comprises at least one of titanium or titanium alloy.

11. The method of any of claims 8 to 10, further comprising forming the first laser deposition spots (320) to each include a diameter of between 0.508 mm and 2.032 mm and a height of between 0.127 mm and 0.508 mm.

12. The method of any of claims 8 to 11, further comprising locating at least one of the second laser deposition spots (330) over a first spot of the first laser deposition spots (320) and a second spot of the first laser deposition spots (320).

13. The method of any of claims 8 to 12, wherein the first layer (320) of first laser deposition spots (320) and the second layer of second laser deposition spots (330) form a weld clad layer comprising a substantially equiaxed grain microstructure.

## Patentansprüche

1. Verfahren zum Herstellen einer Schweißmantelschicht (360), die eine im Wesentlichen gleichachsige Kornmikrostruktur aufweist, wobei mindestens 70 % der Fläche der Schweißmantelschicht aus Körnern besteht, die ein Aspektverhältnis von 6 zu 1 oder weniger aufweisen, wobei das Aspektverhältnis ein Verhältnis von Kornlänge zu Kornbreite ist, wobei das Verfahren Folgendes umfasst:
Herstellen eines Reparaturbereichs (304) in einem Substrat, um einen beschädigten Abschnitt (220) des Substrats zu entfernen, wobei das Substrat mindestens eines von Titan oder eine Titanlegierung umfasst;
**gekennzeichnet durch** Abscheiden einer ersten Schicht von Laserstrahlverdampfungspunkten (320) in dem Reparaturbereich (304), wobei die erste Schicht von Laserstrahlverdampfungspunkten (320) einen ersten Laserstrahlverdampfungspunkt (320) und einen zweiten Lasterstrahlverdampfungspunkt (320) benachbart zu dem ersten Laserstrahlverdampfungspunkt (320) umfasst, wobei eine Größe des ersten Laserstrahlverdampfungspunkts (320) derart ausgewählt ist, dass sich der erste Laserstrahlverdampfungspunkt (320) vor der Abscheidung des zweiten Laserstrahlverdampfungspunkts (320) verfestigt, und wobei der erste Laserstrahlverdampfungspunkt (320) und der zweite Laserstrahlverdampfungspunkt (320) mindestens eines von Titan oder eine Titanlegierung umfassen, wobei jeder Laserstrahlverdampfungspunkt (320) der ersten Schicht von Laserstrahlverdampfungspunkten (320) derart hergestellt ist, dass er eine Höhe zwischen 0,127 mm und 1,016 mm und einen Durchmesser zwischen 0,508 mm und 4,064 mm aufweist; und
Abscheiden einer zweiten Schicht von Laserstrahlverdampfungspunkten (330) über der ersten Schicht von Laserstrahlverdampfungspunkten (320);
wobei eine Laserenergie, die verwendet wird, um jeden Laserstrahlverdampfungspunkt (320) herzustellen, zwischen 100 Watt und 500 Watt liegt und zwischen 0,1 Sekunden und 0,75 Sekunden lang aufgebracht wird.

2. Verfahren nach Anspruch 1, wobei der erste Laserstrahlverdampfungspunkt (320) und der zweite Laserstrahlverdampfungspunkt (320) mindestens eines von einem schmelzschweißbaren Pulvermaterial oder einem schmelzschweißbaren Drahtmaterial umfassen,
wobei, wahlweise, das mindestens eine des schmelzschweißbaren Pulvermaterials oder des schmelzschweißbaren Drahtmaterials das mindestens eine von Titan oder eine Titanlegierung des ersten Laserstrahlverdampfungspunkts (320) und des zweiten Laserstrahlverdampfungspunkts (320) umfasst.

3. Verfahren nach Anspruch 1 oder 2, das ferner Herstellen des ersten Laserstrahlverdampfungspunkts (320) derart umfasst, dass er einen Durchmesser von zwischen 0,508 mm und 2,032 mm und eine Höhe von zwischen 0,127 mm und 0,508 mm umfasst.

4. Verfahren nach Anspruch 1, 2 oder 3, wobei das Herstellen der zweiten Schicht von Laserstrahlverdampfungspunkten (330) über der ersten Schicht von Laserstrahlverdampfungspunkten (320) Folgendes umfasst:
Herstellen eines dritten Laserstrahlverdampfungspunkts (330); und
Herstellen eines vierten Laserstrahlverdampfungspunkts (330) benachbart zu dem dritten Laserstrahlverdampfungspunkt, wobei eine Größe des dritten Laserstrahlverdampfungspunkts (330) derart ausgewählt ist, dass sich der dritte Laserstrahlverdampfungspunkt (330) vor der Abscheidung des vierten Laserstrahlverdampfungspunkts (330) verfestigt.

5. Verfahren nach Anspruch 4, das ferner Lokalisieren des dritten Laserstrahlverdampfungspunkts (330) über dem ersten Laserstrahlverdampfungspunkt (320) und dem zweiten Laserstrahlverdampfungspunkt (320) umfasst.

6. Verfahren nach Anspruch 4 oder 5, wobei der dritte Laserstrahlverdampfungspunkt (330) und der vierte Laserstrahlverdampfungspunkt (330) mindestens eines von Titan oder eine Titanlegierung umfassen.

7. Verfahren nach einem der vorhergehenden Ansprüche, wobei das Substrat ein Schaufelprofil umfasst,
wobei, wahlweise, das Schaufelprofil eine Ventilatorschaufel (200) umfasst.

8. Verfahren zum Reparieren einer Ventilatorschaufel (200) eines Gasturbinentriebwerks (20), das Folgendes umfasst:
Herstellen eines Reparaturbereichs in der Ventilatorschaufel (200), wobei die Ventilatorschaufel (200) mindestens eines von Titan oder eine Titanlegierung umfasst; und
Abscheiden einer ersten Schicht von ersten Laserstrahlverdampfungspunkten (320) in dem Reparaturbereich, wobei die erste Schicht von ersten Laserstrahlverdampfungspunkten (320) Titan oder eine Titanlegierung umfasst;
**gekennzeichnet durch** Abscheiden einer zweiten Schicht von zweiten Laserstrahlverdampfungspunkten (330) über der ersten Schicht von ersten Laserstrahlverdampfungspunkten (320), um eine Schweißmantelschicht herzustellen, die eine im Wesentlichen gleichachsige Kornmikrostruktur umfasst, wobei mindestens 70 % der Fläche der Schweißmantelschicht aus Körnern besteht, die ein Aspektverhältnis von 6 zu 1 oder weniger aufweisen, wobei das Aspektverhältnis ein Verhältnis von Kornlänge zu Kornbreite ist und wobei eine Größe der ersten Laserstrahlverdampfungspunkte (320) derart ausgewählt ist, dass sich die ersten Laserstrahlverdampfungspunkte (320) vor der Abscheidung der zweiten Laserstrahlverdampfungspunkte (320) verfestigen; wobei jeder Laserstrahlverdampfungspunkt (320) der ersten Schicht der Laserstrahlverdampfungspunkte (320) derart hergestellt ist, dass er eine Höhe von zwischen 0,127 mm und 1,016 mm und einen Durchmesser von 0,508 mm und 4,064 mm aufweist;
wobei eine Laserenergie, die verwendet wird, um jeden Laserstrahlverdampfungspunkt (320) herzustellen, zwischen 100 Watt und 500 Watt liegt und zwischen 0,1 Sekunden und 0,75 Sekunden lang aufgebracht wird.

9. Verfahren nach Anspruch 8, wobei die ersten Laserstrahlverdampfungspunkte (320) mindestens eines von einem schmelzschweißbaren Pulvermaterial oder einem schmelzschweißbaren Drahtmaterial umfassen.

10. Verfahren nach Anspruch 9, wobei das mindestens eine schmelzschweißbare Pulvermaterial oder das schmelzschweißbare Drahtmaterial mindestens eines von Titan oder eine Titanlegierung umfasst.

11. Verfahren nach einem der Ansprüche 8 bis 10, das ferner Herstellen der ersten Laserstrahlverdampfungspunkte (320) derart umfasst, dass sie jeweils einen Durchmesser von zwischen 0,508 mm und 2,032 mm und eine Höhe von zwischen 0,127 mm und 0,508 mm beinhalten.

12. Verfahren nach einem der Ansprüche 8 bis 11, das ferner ein Lokalisieren von mindestens einem der zweiten Laserstrahlverdampfungspunkte (330) über einem ersten Punkt der ersten Laserstrahlverdampfungspunkte (320) und einem zweiten Punkt der ersten Laserstrahlverdampfungspunkte (320) umfasst.

13. Verfahren nach einem der Ansprüche 8 bis 12, wobei die erste Schicht (320) der ersten Laserstrahlverdampfungspunkte (320) und die zweite Schicht der zweiten Laserstrahlverdampfungspunkte (330) eine Schweißmantelschicht herstellen, die eine im Wesentlichen gleichachsige Kornmikrostruktur umfasst.

## Revendications

1. Méthode de formation d'un placage soudé (360) ayant une microstructure de grains sensiblement équiaxe, où au moins 70 % de la surface du placage soudé est constituée de grains ayant un rapport de forme de 6 sur 1 ou inférieur, dans laquelle le rapport de forme est un rapport entre la longueur de grain et la largeur de grain, la méthode comprenant :
la formation d'une zone de réparation (304) dans un substrat pour retirer une partie endommagée (220) du substrat, le substrat comprenant au moins l'un parmi du titane et un alliage de titane ;
**caractérisée par** le dépôt d'une première couche de points de soudure par laser (320) dans la zone de réparation (304), la première couche de points de soudure par laser (320) comprenant un premier point de soudure par laser (320) et un deuxième point de soudure par laser (320) adjacent au premier point de soudure par laser (320), dans laquelle une taille du premier point de soudure par laser (320) est choisie de sorte que le premier point de soudure par laser (320) se solidifie avant le dépôt du deuxième point de soudure par laser (320), et dans laquelle le premier point de soudure par laser (320) et le deuxième point de soudure par laser (320) comprennent au moins l'un parmi du titane et un alliage de titane, dans laquelle chaque point de soudure par laser (320) de la première couche de points de soudure par laser (320) est formé avec une hauteur comprise entre 0,127 mm et 1,016 mm et un diamètre compris entre 0,508 mm et 4,064 mm ; et
le dépôt d'une seconde couche de points de soudure par laser (330) sur la première couche de points de soudure par laser (320) ;
dans laquelle une énergie laser utilisée pour former chaque point de soudure par laser (320) est comprise entre 100 watts et 500 watts et est appliquée pendant 0,1 seconde à 0,75 seconde.

2. Méthode selon la revendication 1, dans laquelle le premier point de soudure par laser (320) et le deuxième point de soudure par laser (320) comprennent au moins l'un parmi un matériau en poudre soudable par fusion et un matériau de fil soudable par fusion,
dans laquelle, éventuellement, l'au moins un parmi le matériau en poudre soudable par fusion et le matériau de fil soudable par fusion comprend l'au moins un parmi du titane et un alliage de titane du premier point de soudure par laser (320) et du deuxième point de soudure par laser (320).

3. Méthode selon la revendication 1 ou 2, comprenant en outre la formation du premier point de soudure par laser (320) pour présenter un diamètre compris entre 0,508 mm et 2,032 mm et une hauteur comprise entre 0,127 mm et 0,508 mm.

4. Méthode selon la revendication 1, 2 ou 3, dans laquelle la formation de la seconde couche de points de soudure par laser (330) sur la première couche de points de soudure par laser (320) comprend :
la formation d'un troisième point de soudure par laser (330) ; et
la formation d'un quatrième point de soudure par laser (330) adjacent au troisième point de soudure par laser, dans laquelle une taille du troisième point de soudure par laser (330) est choisie de sorte que le troisième point de soudure par laser (330) se solidifie avant le dépôt du quatrième point de soudure par laser (330).

5. Méthode selon la revendication 4, comprenant en outre la localisation du troisième point de soudure par laser (330) sur le premier point de soudure par laser (320) et le deuxième point de soudure par laser (320).

6. Méthode selon la revendication 4 ou 5, dans laquelle le troisième point de soudure par laser (330) et le quatrième point de soudure par laser (330) comprennent au moins l'un parmi du titane et un alliage de titane.

7. Méthode selon une quelconque revendication précédente, dans laquelle le substrat comprend un profil aérodynamique,
dans laquelle, éventuellement, le profil aérodynamique comprend une aube de soufflante (200).

8. Méthode de réparation d'une aube de soufflante (200) d'un moteur à turbine à gaz (20), comprenant :
la formation d'une zone de réparation dans l'aube de soufflante (200), l'aube de soufflante (200) comprenant au moins l'un parmi du titane et un alliage de titane ; et
le dépôt d'une première couche de premiers points de soudure par laser (320) dans la zone de réparation, la première couche de premiers points de soudure par laser (320) comprenant du titane ou un alliage de titane ;
**caractérisée par** le dépôt d'une seconde couche de deuxièmes points de soudure par laser (330) sur la première couche de premiers points de soudure par laser (320), pour former un placage soudé comprenant une microstructure de grains sensiblement équiaxe, où au moins 70 % de la surface du placage soudé est constituée de grains ayant un rapport de forme de 6 sur 1 ou inférieur, dans laquelle le rapport de forme est un rapport entre la longueur de grain et la largeur de grain, et dans laquelle une taille des premiers points de soudure par laser (320) est choisie de sorte que les premiers points de soudure par laser (320) se solidifient avant le dépôt des deuxièmes points de soudure par laser (320) ; dans laquelle chaque point de soudure par laser (320) de la première couche de points de soudure par laser (320) est formé avec une hauteur comprise entre 0,127 mm et 1,016 mm et un diamètre compris entre 0,508 mm et 4,064 mm ;
dans laquelle une énergie laser utilisée pour former chaque point de soudure par laser (320) est comprise entre 100 watts et 500 watts et est appliquée pendant 0,1 seconde à 0,75 seconde.

9. Méthode selon la revendication 8, dans laquelle les premiers points de soudure par laser (320) comprennent au moins l'un parmi un matériau en poudre soudable par fusion et un matériau de fil soudable par fusion.

10. Méthode selon la revendication 9, dans laquelle l'au moins un parmi le matériau en poudre soudable par fusion et le matériau de fil soudable par fusion comprend au moins l'un parmi du titane et un alliage de titane.

11. Méthode selon l'une quelconque des revendications 8 à 10, comprenant en outre la formation des premiers points de soudure par laser (320) pour que chacun présente un diamètre compris entre 0,508 mm et 2,032 mm et une hauteur comprise entre 0,127 mm et 0,508 mm.

12. Méthode selon l'une quelconque des revendications 8 à 11, comprenant en outre la localisation d'au moins l'un des deuxièmes points de soudure par laser (330) sur un premier point des premiers points de soudure par laser (320) et un deuxième point des premiers points de soudure par laser (320).

13. Méthode selon l'une quelconque des revendications 8 à 12, dans laquelle la première couche (320) de premiers points de soudure par laser (320) et la seconde couche de deuxièmes points de soudure par laser (330) forment un placage soudé comprenant une microstructure de grains sensiblement équiaxe.
